# EUROPEAN PATENT SPECIFICATION

(11) **EP 2 945 398 B1**
(45) Date of publication and mention of the grant of the patent: **11.10.2017**
(21) Application number: 14179819.9
(22) Date of filing: 05.08.2014
(51) Int. Cl.: H04R 1/10, H04R 29/00, H04R 3/00

(54) **Motion sensor**
Bewegungssensor
Capteur de mouvement

(30) Priority: 15.05.2014 EP 14168439
(43) Date of publication of application: 18.11.2015
(73) Proprietor: NXP B.V., 5656 AG Eindhoven (NL)
(72) Inventor: Macours, Christophe, Redhill Surrey RH1 1SH (GB); Schuurmans, Hans, Redhill Surrey RH1 1SH (GB)
(74) Representative: Miles, John Richard

(56) References cited:
- EP-A1- 2 375 775
- EP-A1- 2 387 251
- WO-A1-2005/099301
- WO-A1-2006/075275
- US-A1- 2013 051 567
- US-A1- 2013 133 431

## Description

### FIELD OF INVENTION

This invention relates to a motion sensor for a mobile device.

### BACKGROUND

Mobile devices such as mobile phones and tablet computers are getting smarter with more "always-on" functionalities which continuously sense the environment to perform actions such as device wake-up, voice keyword detection. Consequently mobile devices have a variety of sensors such as touch screens and accelerometers or motion sensors. These sensors may also be used to replace traditional input devices such as buttons. For example device wake-up is traditionally done using a dedicated button that wakes up the main processor when pressed. Some smartphones even currently support device awakening and unlocking by screen tapping or swiping such as LG G2 "Knock knock" or HTC M8 "Motion Launch" Moreover, most accelerometers now support a low power sleep mode allowing the detection of specific events (such as (double) tapping, free fall, activity, ...) at a reduced power consumption.

US 20130133431 A1 describes an input device is connectable to a headphone that includes a speaker unit. US 20130051567 A1 describes tap detection of a sound output device. WO 2006075275 A1 describes an audio entertainment system having an earbud having an electro-acoustic transduced arranged to detect for example tapping on the earbud. EP2387251A1 describes an apparatus for generating a first acoustic signal and simultaneously sensing a second acoustic signal. WO2005099301 A1 describes an audio entertainment system comprising a set of earpieces for transducing audio with a first earpiece having a first input means for receiving input to control the transducing.

### SUMMARY OF INVENTION

Various aspects of the invention are defined in the accompanying claims. In a first aspect there is defined a motion sensor for a mobile device the motion sensor comprising: a loudspeaker for outputting an audio signal, the loudspeaker having a loudspeaker input; a further loudspeaker mechanically coupled to the loudspeaker, the further loudspeaker having a further loudspeaker input; a trigger detector having a trigger input coupled to the loudspeaker input, a further trigger input coupled to the further loudspeaker input, and a trigger output; wherein the trigger detector is operable to output a detection signal on the trigger output in response to a mechanically induced signal on the loudspeaker input and the further loudspeaker input in response to a motion source; and the trigger detector further comprises a multi-trigger detector module coupled to the trigger input, the further trigger input and the trigger output; wherein the multi-trigger detector module is operable to compare a signal received on the trigger input with a reference waveform, to compare a signal received on the further trigger input with a further reference waveform, and to output an activation signal on the trigger output if the reference waveform matches a signal received on the trigger input and the further reference waveform matches the signal received on the further trigger input, and the trigger detector is further arranged to determine a delay value from a measurement of the delay between a signal received on the trigger input and a signal received on the further trigger input and to determine a location of the motion source from the delay value. The motion sensor requires very little current to operate when in a standby or sleep mode since the loudspeaker does not require any DC bias. The loudspeaker is sensitive to mechanical vibrations and less sensitive to audio sources which may cause a response by acoustic coupling. The response of the loudspeaker to a user input may therefore be detected more simply, since the loudspeaker response to a mechanical impulse will be greater than a response to an external audio source.

The use of multiple speakers may improve the reliability of detecting a motion source. For example, the output of the motion sensor may only be triggered if a response is detected above a predetermined threshold on all the inputs of the trigger detector.

The delay in response between loudspeakers may be used to determine a location of the motion source. This may be for example the location of a user tapping a surface mechanically coupled to the motion sensor.

A motion source may be, for example a user tapping the motion sensor or a surface mechanically coupled to the motion sensor. A motion source may be for example a user picking up the mobile sensor. The action of tapping or picking up the motion sensor may result in a mechanical impulse or vibration being transmitted to the loudspeaker. The resulting response of the loudspeaker may induce an electrical signal on the input terminals.

In embodiments the trigger detector may comprise a reference waveform module for storing at least one reference waveform and a comparison module, the comparison module having a first input coupled to the trigger input, a second input coupled to an output of the at least one reference waveform, and an output coupled to the trigger output, and wherein trigger detector is operable to output the detection signal on the trigger output if a signal on the trigger input matches a reference waveform , wherein each reference waveform represents an expected mechanically induced signal generated on the input of the loudspeaker.

The reference waveform may be an expected signal waveform or may be a collection of parameters representing an expected signal. The collection of parameters may be referred to as a signal signature. For example, a signal signature may be a signal with a signal level above a user-defined threshold within a user-defined time interval.

In embodiments the trigger detector may comprise a filter having an input coupled to the loudspeaker input.

The filter may be a low pass filter since the mechanically induced response of the loudspeaker may have more low frequency components than an acoustic response. The upper cut-off frequency of the filter may be at a frequency of at least one octave below the resonant frequency of the loudspeaker.

In embodiments, the trigger detector comprises a comparator having an input coupled to the filter output and wherein the comparator is operable to output a signal above a predetermined threshold value.

In embodiments the trigger detector may comprise a controller having an input coupled to the output of the comparator and an output coupled to the trigger output wherein the controller is operable to determine if the output of the comparator matches a predetermined reference waveform and output a signal on the trigger output.

The comparator may have a predetermined threshold value according to the expected response. The comparator may be left always powered on since typical implementations may consume less than 1 micro amp.

In embodiments of the motion sensor, the trigger detector may comprise a controller having an input coupled to the output of the comparator and an output coupled to the trigger output wherein the controller is operable to output an activation signal if the comparator outputs two or more signals above the predetermined threshold value within a predetermined time period.

The controller may include one or more counters to determine how many events have been detected. This may improve the reliability of the motion detection. The controller may also be configured to respond to a specific motion source, for example a user double-tapping the motion sensor.

In embodiments, the motion sensor may be incorporated into a mobile device comprising a housing mechanically coupled to the loudspeaker.

Since the housing is mechanically coupled to the loudspeaker, the motion sensor may be sensitive to any vibration on the housing. This may be due to a motion source such as a user tapping the housing, or a user picking up the mobile device. Example mobile devices include but are not limited to a mobile phone, a tablet computer, a laptop, or a portable audio player.

In embodiments, the motion sensor may be incorporated into a mobile device comprising an audio amplifier coupled to the loudspeaker input and a processor coupled to the trigger output, wherein the mobile device is operable to change from a first mode to a second mode of operation in response to a user tapping the housing.

The first mode of operation may be a standby mode which consumes less power than the second mode of operation. The motion sensor may be used to detect a user tap indicating that the mobile device should wake up.

In embodiments, the mobile device may be operable to switch on in response to a user tapping the housing. Because of the extremely low power consumption, the motion sensor may be used as a replacement to a power on switch.
In embodiments of a motion sensor incorporated in a mobile device, in a first mode of operation, the trigger detector is enabled and the audio amplifier is disabled and in a second mode of operation the trigger detector is disabled and the audio amplifier is enabled.
If the motion detection is only required in a specific mode of operation, then by disabling a normal audio output, the detection circuitry in the trigger detector may be simplified. For example, a filter may be replaced by a simple switch.
In embodiments of a motion sensor incorporated in a mobile device, the mobile device may be operable to determine a location of a tap on the housing by a user.
In the figures and description like reference numerals refer to like features Embodiments of the invention are now described in detail, by way of example only, illustrated by the accompanying drawings in which:
Figure 1 shows a motion sensor according to an example provided for better understanding of the invention.
Figure 2 illustrates a motion sensor according to an example provided for better understanding of the invention.
Figure 3 shows a loudspeaker control system with a motion sensor circuit according to an example provided for better understanding of the invention.
Figure 4 illustrates a motion sensor with two loudspeakers according to an embodiment.
Figure 5 illustrates location detection using the motion sensor of figure 4.
Figure 6 describes a method of operating a mobile device including a motion sensor according to an example provided for better understanding of the invention.

### DESCRIPTION

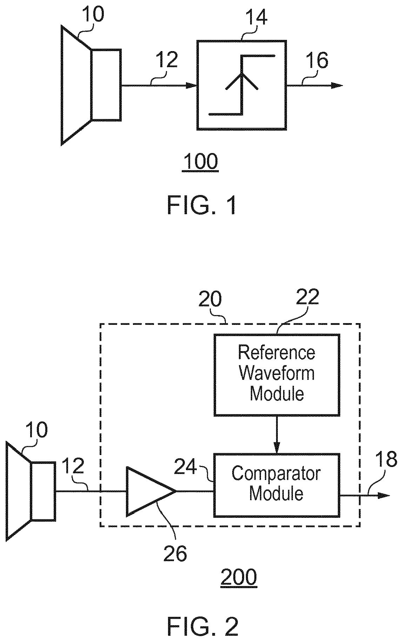

Figure 1 describes a motion sensor 100. The motion sensor 100 may have a loudspeaker 10 may have a connection 12 to an input of a trigger detector 14. The trigger detector 14 may have a trigger output 16. The trigger output 16 may be connected for example to a processor (not shown). In operation the loudspeaker may be used in a normal mode for outputting an audio signal. In a normal mode the loudspeaker may be driven by an audio amplifier (not shown) which may be a class D amplifier. In a sensing mode, the trigger detector 14 may be activated by a signal induced on input terminals of the loudspeaker 10. This signal may be induced by a moving source mechanically coupled to the loudspeaker. This moving source may induce mechanical vibrations in the loudspeaker 10, and consequently induce a varying voltage on the input terminal or terminals the loudspeaker 10. The varying voltage may be considered as an input signal to the trigger detector 14. The trigger detector 14 may determine whether this input signal is due to a motion source such as a user tapping a surface mechanically coupled to the loudspeaker 10 or alternatively a user moving the loudspeaker 10 and thereby inducing vibration in the loudspeaker due to the mechanical coupling. The skilled person will appreciate that where the mechanical vibrations in the loudspeaker are caused by the motion of a user of the loudspeaker, then the mechanical coupling between the loudspeaker and the user of the loudspeaker will be temporary. The determination of whether an input to the trigger detector 14 is caused by motion or some other factor such as an audio source acoustically coupled to the loudspeaker may be done by a comparison between an input signal and an expected response of the loudspeaker 10 to a motion source. Alternatively, or in addition, the comparison may be a comparison with respect to a predetermined threshold value. The trigger detector 14 may be disabled when an audio amplifier coupled to the loudspeaker is active. This may avoid false triggering of the trigger detector 14. The trigger detector output 16 may be used to trigger a processor to wake-up a device in which the motion sensor 100 is incorporated. The motion sensor 100 may therefore be used in a standby mode of a device to respond to for example a user tapping that device, thereby generating a voltage on the input terminals of the loudspeaker 10, which in turn may be detected by the trigger detector 14. Since the loudspeaker 10 is mechanically coupled to the rest of a device, it is extremely sensitive to vibrations induced on the device. Furthermore loudspeaker 10 does not require any DC bias voltage when a device in a standby mode of operation. Consequently a motion sensor 100 may consume very little power, typically less than 1uA. Such a motion sensor may be used as a replacement for an on-off switch in a mobile device, since the power consumption of the motion sensor is so low it can remain permanently connected to a battery and draw virtually no current. The skilled person will appreciate that trigger detector 14 may be implemented in hardware, software or a combination of hardware and software.

The loudspeaker 10 may be for example an electro-dynamic loudspeaker. The trigger detector 14 may output an interrupt signal on the trigger detector output 16 in an example mobile device including a motion sensor, the interrupt signal may be used to signal an application processor to wake up the mobile device, that is change from a low-power standby or sleep mode to a higher power, normal mode of operation.

Figure 2 illustrates a motion detector 200. A loudspeaker 10 may have a connection 12 from at least one input terminal to an input of an amplifier 26. The amplifier 26 may amplify an induced voltage on the input terminals of the loudspeaker 10 to condition the signal to a required level. An output of the amplifier 26 may be connected to a comparator module 24. A reference signal generator 22 may have an output connected to the comparator module 24. The reference waveform module 22 may include a memory which stores one or more expected or reference waveforms. The reference waveform may be an expected signal waveform or may be a collection of parameters representing an expected signal. The collection of parameters may be referred to as a signal signature. For example, a signal signature may be a signal with a signal level above a user-defined threshold within a user-defined time interval. The amplifier 26, the comparator module 24, and the reference signal generator 22 may form a trigger detector 20. The output of the comparator module 24 may be connected to the trigger detector output 18. The comparator module 24 may compare a signal received from the output of the amplifier 26 with one or more reference signals from the reference signal generator 22. The comparator module 24 may output a signal on trigger detector output 18 if the input signal matches one or more signals produced by the reference signal generator 22. The term "match" as used in this context does not mean that the input signal has to be identical to the reference signal, but rather that the input signal characteristics are considered to be representative of an expected response of the loudspeaker to a motion source mechanically coupled to the loudspeaker. A signal match may for example be a signal level comparison. The motion source may be for example a user tapping the loudspeaker directly or a surface which is mechanically coupled to the loudspeaker 10. The motion source may also be a user picking up the loudspeaker 10 or a device in which the loudspeaker 10 is housed. The reference signal generator 22 and the comparator module 24 may be implemented in hardware, software, or a combination of hardware and software. The skilled person will appreciate that for a motion source involving a user of the motion sensor 200, the mechanical coupling between the user and the motion sensor 200 will be temporary. The reference signal generator 22 may also include other types of motion source, for example different types of user generated taps such as nail tapping or finger tapping.

In an alternative example implementation of the trigger detector 20, the amplifier 26 may be omitted if the signal level output by the loudspeaker is sufficiently large for a motion source to be reliably detected directly by the comparator module.

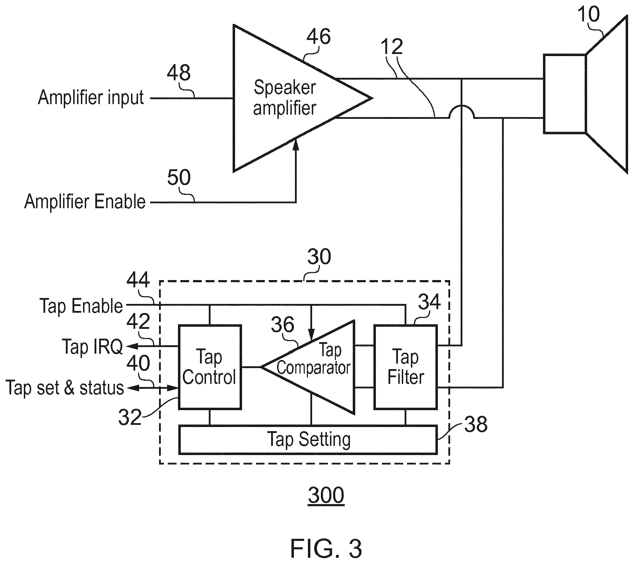

Figure 3 shows a loudspeaker system including a motion sensor 300. An audio amplifier 46 may have an audio input 48 and an output 12 which may be connected 12 to the loudspeaker 10. Audio amplifier 46 may have an enable input 50. The connection 12 between the loudspeaker amplifier 46 and the loudspeaker 10 may be a connection between a pair of loudspeaker amplifier output terminals and a pair of loudspeaker terminals. Alternatively the connection 12 may be a connection to a single loudspeaker terminal with the other terminal being connected to a ground voltage. The input to the loudspeaker 10 is also connected to the input of a filter 34 and the output of the filter 34 is connected to a comparator 36. The output of comparator 36 is connected to a controller 32 and the output of controller 32 may be connected to an interrupt request line 42. Controller 32 may also have control and status lines 40 which may be a control bus. A configuration module 38 may be connected to the filter 34, comparator 36 and controller 32. The controller 32, filter 34, comparator 36 and configuration module 38 may form a trigger detector 30. An enable input 44 to trigger detector 30 may be connected to the controller 32, filter 34 and comparator 36. In a normal mode of operation, the audio amplifier 46 may drive the loudspeaker 10 by enabling the amplifier using amplifier enable input 50. In a standby mode of operation, the audio amplifier 46 may be disabled using amplifier enable input 50. When the loudspeaker amplifier 46 is off, the output of the loudspeaker amplifier may be in tri-state or high impedance. The operation of the trigger detector 30 is as follows. The filter 34 may filter out unwanted signals from the input terminals of the loudspeaker 10.

These unwanted signals may be for example audio signals from the loudspeaker amplifier 50 if it is enabled at the same time as the trigger detector 30. These unwanted signals may also be higher frequency components caused by an external source which acoustically couples to the loudspeaker. The filter 34 may discriminate between mechanically coupled signal sources and other signal sources. Typically the loudspeaker amplifier will be disabled when the trigger detector 30 is enabled via enable control 44 and vice versa. This may allow for a much simpler filter 34, which may simply be a switch that connects to the loudspeaker 10 whenever the loudspeaker amplifier 46 is disabled. The comparator 36 may have adjustable trigger threshold levels. In a standby mode of operation, the comparator 36 may still need a power supply. However other parts of the trigger detector 30, such as the controller 32 may not need a power supply until an output from the comparator 36 is received. The comparator 36 may be an amplifier which amplifies the loudspeaker small signal amplitude to a level sufficient to make a logical signal. The signal amplitudes may be in the range of 1 mV. The threshold level may be of the order of 100 µV. The equivalent noise level may be 10 times below the threshold level but could be higher or lower. The current consumption of the comparator 36 may be for example between 50 and 70 nanoamps. The controller 32 may have a time reference which is enabled after a trigger signal from the comparator 36. The controller may have a counter which counts the time between two events corresponding to trigger signal output from the comparator 36. The frequency of the oscillator or clock used to count the time may be very low, for example a few hertz, as it is only required to detect the time between two events which may be caused by a user tapping the mobile sensor. Controller 32 may include a pattern recogniser which compares the incoming events with a stored sequence. If the incoming sequence matches the stored sequence, an interrupt signal may be generated on output 42. An application processor (not shown) which may be connected to the interrupt output 42 may then activate and wake-up the rest of the system. The detected events may be the time between taps of a user. Alternatively the events may be the time between zero crossings or the duration of signal pulses input to the controller 32. In this case more complex pattern matching may be detected before setting an interrupt request on the interrupt output 42. Configuration module 38 may set variables for the filter 34, which may be filter coefficients. Configuration module 38 may set threshold levels for comparator 36. Configuration module 38 may also determine configuration of the controller 32, for example in to determine whether or not to count the time between successive events from the output of the comparator 36 or to count zero crossings or signal pulse duration. Checking zero crossings or signal pulse duration will discriminate for example between a tap which has more low frequency components, and a hand clap which has more high frequency components. This may be used to determine whether or not the source is mechanically coupled to the motion sensor to prevent false triggering of the motion sensor.

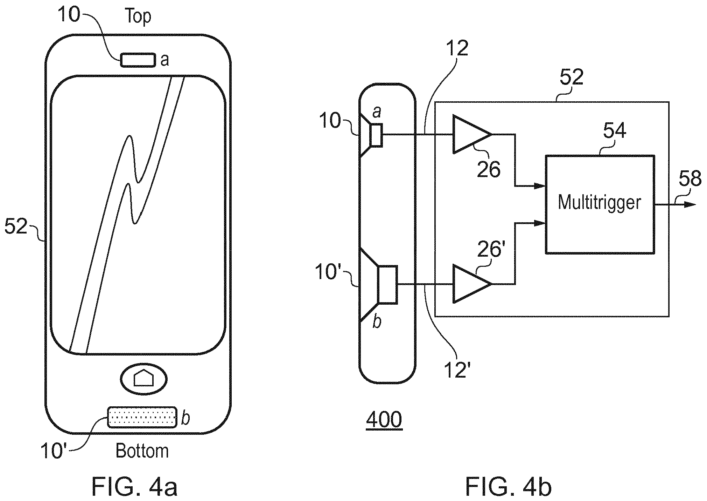

Figure 4a shows a motion sensor 400 having a first loudspeaker 10 and a further loudspeaker 10'. The first loudspeaker 10 and the second loudspeaker 10' may be housed in a housing 52. The motion sensor 400 may be incorporated as part of the mobile device. The input of the loudspeaker 10 may be connected to a first amplifier 26 by connections 12. The input of the loudspeaker 10' may be connected to the input of a second amplifier 26' by connections 12'. The output of the first amplifier 26 may be connected to an input of a multi-trigger module 54. An output of second amplifier 26' may be connected to a further input of the multi-trigger module 54. The output of multi-trigger module 54 may be connected to a trigger output 58. An amplifier 26, second amplifier 26', and multi-trigger module 54 may be considered to form a trigger detector 56. In operation the motion sensor 400 may detect a motion from a motion source which causes a mechanical vibration in the housing, resulting in a loudspeaker 10 and the second loudspeaker 10' resonating. The motion source may be for example a user tapping the housing 52. Since the housing 52 is mechanically coupled to the first loudspeaker 10 and the second loudspeaker 10', any vibration induced in the housing will be coupled to the first loudspeaker 10 and the second loudspeaker 10'. Alternatively the motion source may be a user moving the housing 52. The movement of the housing 52 may also induce vibration which in turn is transmitted to the first loudspeaker 10 and the second loudspeaker 10', thereby inducing a voltage on the input terminals of the first loudspeaker 10 and the second loudspeaker 10'. The voltage induced on the terminals of the first speaker 10 and the terminals of the second loudspeaker 10' may then be detected by the multi-trigger module 54. The multi-trigger module 54 may then generate an output signal on the trigger detector output 58. This output signal may be used as an interrupt if connected to an application processor (not shown). The use of two loudspeakers as inputs to the trigger detector 56 may be used to improve the accuracy of the trigger detection thereby preventing false triggers. For example, the trigger detector output 58 may only output a signal if both the output of amplifier 26 and the output of second amplifier 26' generate a signal within a predetermined time interval.

In other examples, multiple loudspeakers may be included to further improve the accuracy of motion detection.

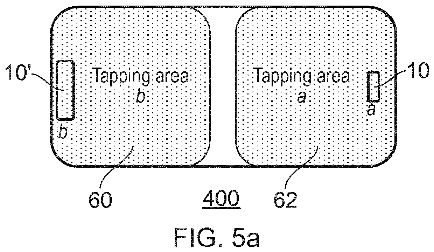

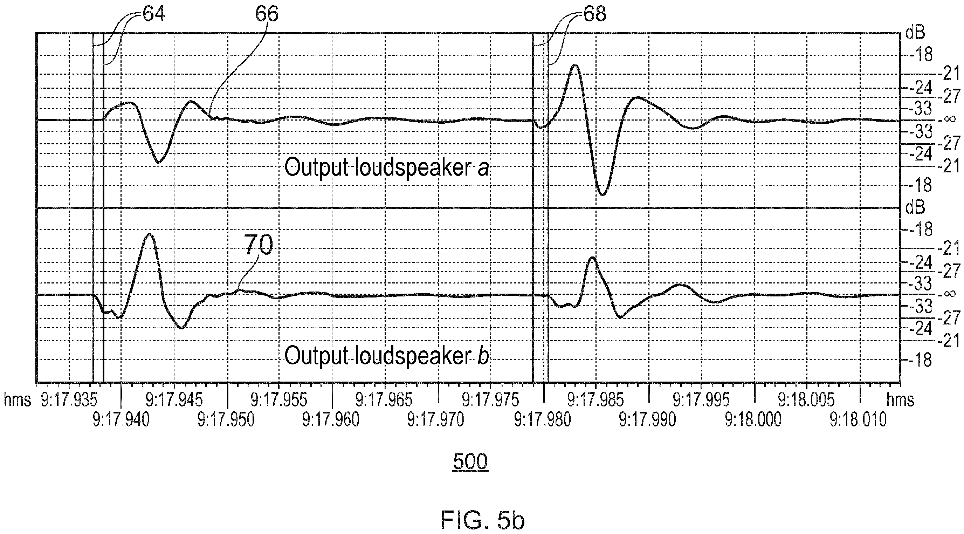

Furthermore the use of two or more loudspeakers may enable position information to be determined. This is illustrated for example in figure 5.

Figure 5A shows the motion sensor 400 with a first tapping area 60 and second tapping area 62. Figure 5B shows a graph of an example response of the loudspeaker 10 and the second loudspeaker 10' dependent on the nearest location to the motion source. Graph line 66 shows an output response of loudspeaker 10 dependent on the location of a motion source. Graph line 70 shows the response of the second loudspeaker 10' dependent on the location of the motion source. In this example, the response is shown for a user tapping the housing 52 in either the first area 60 or a second area 62. When the user taps in area 60 the second loudspeaker 10' responds first, the delay in the response between the second loudspeaker 10' and the first loudspeaker 10 is illustrated in the lines 64. The trigger detector 52 may detect the delay in the response between the first loudspeaker 10 and second loudspeaker 10' using techniques known to the skilled person. This delay then gives an indication that the motion was detected in the area 60 of the housing 52. Conversely when the user taps in area 62, the first loudspeaker 10 responds first since it is nearer the motion source. The delay in the response is illustrated in figure 5B reference 68. The skilled person will appreciate that other techniques may also be used to determine the location of a motion source with a motion sensor 400. For example the amplitude of the response of the loudspeaker may also be used to determine a distance from a motion source. The processing of the signals to determine the distance from a motion source may be carried out in the time domain or the frequency domain.

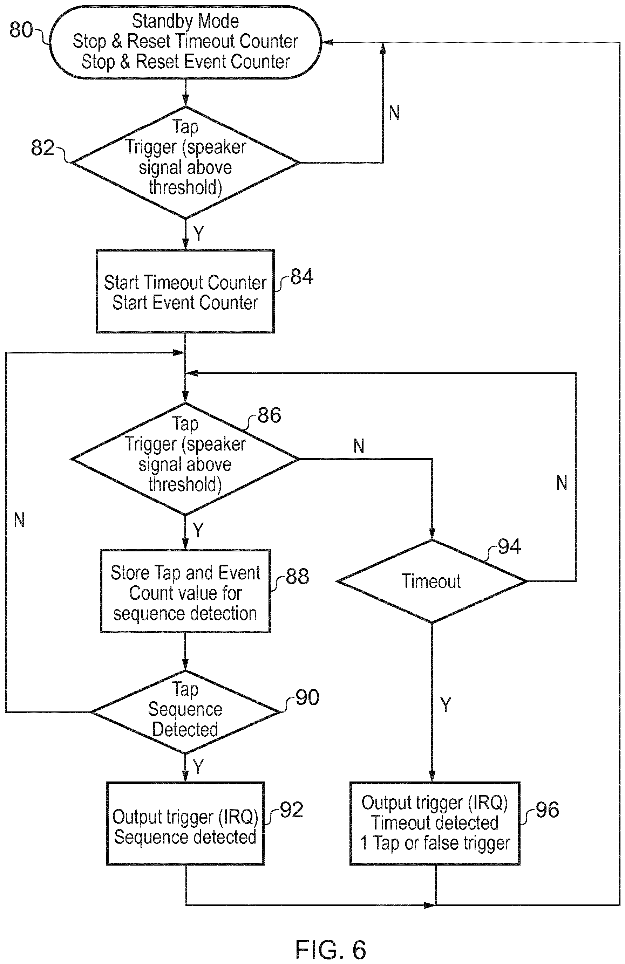

Embodiments of the motion sensor may be incorporated into a mobile device, such as a mobile phone, a tablet computer or a laptop computer. An example of the use of a motion sensor as herein described to generate a wake-up signal by tapping a mobile device when in a standby mode or other low power mode is illustrated in figure 6. In step 80, a mobile device may be in a standby mode. In this case an event counter and a timeout counter may be reset. In step 82 a comparison may be made between a threshold value and a speaker signal. If the speaker signal is greater than a threshold value, a first tap is detected and the method proceeds to step 84 where the time out counter is started. This may be done for example by enabling an oscillator. An event counter may also be started and incremented. When in step 82 and If the speaker signal is less than or equal to the threshold value then the method returns to step 80. When in step 84, the method proceeds to step 86 where a second tap may be detected. If the speaker signal is below the threshold value a check is made in step 94 to determine if the timeout value has been reached. If the timeout is reached, then in step 96 indications are made that the timeout has been detected so therefore there is a false trigger. In step 96 method returns to step 80 where the sequence begins again. If the timeout has not been reached in step 94 the method returns to the comparison step 86. If the speaker signal exceeds the threshold, in step 88 a signal and event count value may be stored for sequence detection. In step 90 a check may be made to see if a tap sequence has been detected. If a tap sequencer has not been detected the method returns to step 86. If a tap sequence has been detected then in step 92 an output trigger is set indicating a sequence detected. The method then returns to step 80. The skilled person will appreciate that if this output trigger is then used to wake-up the system connected to the motion detector then the standby mode may be exited and the process described in figure 6 will stop until the standby mode is re-entered. Alternative wake-up sequences may be used with embodiments of the motion sensor herein described. For example a more sophisticated matching of the input signal with an expected reference signal may be used. Alternatively the delay between successive detected signals or events may be measured to determine a specific input pattern such as a sequence of user taps.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A motion sensor (100, 200, 400) for a mobile device, the motion sensor comprising:
a loudspeaker (10) for outputting an audio signal, the loudspeaker having a loudspeaker input;
a further loudspeaker (10') mechanically coupled to the loudspeaker, the further loudspeaker having a further loudspeaker input;
a trigger detector (52) having a trigger input coupled to the loudspeaker input, a further trigger input coupled to the further loudspeaker input, and a trigger output; wherein
the trigger detector is operable to output a detection signal on the trigger output in response to a mechanically induced signal on the loudspeaker input and the further loudspeaker input in response to a motion source; and
the trigger detector further comprises a multi-trigger detector module (54) coupled to the trigger input, the further trigger input and the trigger output;
wherein the multi-trigger detector module is operable to compare a signal received on the trigger input with a reference waveform, to compare a signal received on the further trigger input with a further reference waveform, and to output an activation signal on the trigger output if the reference waveform matches a signal received on the trigger input and the further reference waveform matches the signal received on the further trigger input, and
the trigger detector is further arranged to determine a delay value from a measurement of the delay between a signal received on the trigger input and a signal received on the further trigger input and to determine a location of the motion source from the delay value.

2. The motion sensor of claim 1 wherein the trigger detector comprises a reference waveform module (22) for storing at least one reference waveform and a comparison module (24), the comparison module having a first input coupled to the trigger input, a second input coupled to an output of the at least one reference waveform, and an output coupled to the trigger output, and wherein trigger detector is operable to output the detection signal on the trigger output if a signal on the trigger input matches a reference waveform, wherein each reference waveform represents an expected mechanically induced signal generated on the input of the loudspeaker.

3. The motion sensor of claim 1 wherein the trigger detector comprises a comparator (36) having a comparator input coupled to the trigger input and wherein the comparator is operable to output a signal above a predetermined threshold value.

4. The motion sensor of claim 3 wherein the trigger detector comprises a filter (34) having an input coupled to the loudspeaker input, and an output coupled to the comparator input.

5. The motion sensor of claim 3 or 4 wherein the trigger detector further comprises a controller (32) having an input coupled to the output of the comparator and an output coupled to the trigger output wherein the controller is operable to determine if the output of the comparator matches a predetermined reference waveform and output a signal on the trigger output.

6. The motion sensor of any of claims 3 or 4 wherein the trigger detector further comprises a controller having an input coupled to the output of the comparator and an output coupled to the trigger output wherein the controller is operable to output an activation signal if the comparator outputs two or more signals above the predetermined threshold value within a predetermined time period.

7. A mobile device (400) comprising the motion sensor of any preceding claim, the mobile device comprising a housing mechanically coupled to the loudspeaker.

8. The mobile device of claim 7 further comprising an audio amplifier (46) coupled to the loudspeaker input and a processor coupled to the trigger output, wherein the mobile device is operable to change from a first mode to a second mode of operation in response to a user tapping the housing.

9. The mobile device of claim 7 or 8 wherein the mobile device is operable to switch on in response to a user tapping the housing.

10. The mobile device of claim 8, wherein in the first mode of operation, the trigger detector is enabled and the audio amplifier is disabled and in the second mode of operation the trigger detector is disabled and the audio amplifier is enabled.

11. A mobile device of any of claims 7 to 10 wherein the mobile device is operable to determine a location of a tap on the housing by a user.

12. The mobile device of claim 11 comprising one of a mobile phone, a tablet computer and a laptop.

## Patentansprüche

1. Ein Bewegungssensor (100, 200, 400) für eine mobile Vorrichtung, wobei der Bewegungssensor aufweist:
einen Lautsprecher (10) zum Ausgeben eines Audiosignals, wobei der Lautsprecher einen Lautsprechereingang hat;
einen weiteren Lautsprecher (10'), welcher mit dem Lautsprecher mechanisch gekoppelt ist, wobei der weitere Lautsprecher einen weiteren Lautsprechereingang hat;
einen Trigger Detektor (52), welcher einen Triggereingang hat, der mit dem Lautsprechereingang gekoppelt ist, einen weiteren Triggereingang hat, der mit dem weiteren Lautsprechereingang gekoppelt ist, und einen Triggerausgang hat; wobei
der Trigger Detektor funktionsfähig ist zum Ausgeben eines Detektionssignals an dem Triggerausgang als Reaktion auf ein mechanisch induziertes Signal an dem Lautsprechereingang und dem weiteren Lautsprechereingang als Reaktion auf eine Bewegungsquelle; und
der Trigger Detektor ferner ein Multi-Trigger Detektormodul (54) aufweist, welches mit dem Triggereingang, dem weiteren Triggereingang und dem Triggerausgang gekoppelt ist;
wobei das Multi-Trigger Detektormodul funktionsfähig ist zum Vergleichen eines Signals, welches an dem Triggereingang empfangen wird, mit einer Referenz Wellenform, zum Vergleichen eines Signals, welches an dem weiteren Triggereingang empfangen wird, mit einer weiteren Referenz Wellenform, und zum Ausgeben eines Aktivierungssignals an dem Triggerausgang, falls die Referenz Wellenform mit einem Signal übereinstimmt, welches an dem Triggereingang empfangen wird, und die weitere Referenz Wellenform mit dem Signal übereinstimmt, welches an dem weiteren Triggereingang empfangen wird, und
wobei der Trigger Detektor ferner eingerichtet ist zum Bestimmen eines Verzögerungswerts aus einer Messung der Verzögerung zwischen einem Signal, welches an dem Triggereingang empfangen wird, und einem Signal, welches an dem weiteren Triggereingang empfangen wird, und zum Bestimmen einer Position der Bewegungsquelle aus dem Verzögerungswert.

2. Der Bewegungssensor gemäß Anspruch 1, wobei der Trigger Detektor ein Referenz Wellenform Modul (22) zum Speichern von zumindest einer Referenz Wellenform und ein Vergleichsmodul (24) aufweist, wobei das Vergleichsmodul einen ersten Eingang hat, welcher mit dem Triggereingang gekoppelt ist, einen zweiten Eingang hat, welcher mit einem Ausgang der zumindest einen Referenz Wellenform gekoppelt ist, und einen Ausgang hat, welcher mit dem Triggerausgang gekoppelt ist, und wobei der Trigger Detektor funktionsfähig ist zum Ausgeben des Detektionssignals an dem Triggerausgang, falls ein Signal an dem Triggereingang mit einer Referenz Wellenform übereinstimmt, wobei jede Referenz Wellenform ein erwartetes mechanisch induziertes Signal repräsentiert, welches an dem Eingang des Lautsprechers erzeugt wird.

3. Der Bewegungssensor gemäß Anspruch 1, wobei der Trigger Detektor einen Komparator (36) aufweist, welcher einen Komparatoreingang hat, der mit dem Triggereingang gekoppelt ist, und wobei der Komparator funktionsfähig ist zum Ausgeben eines Signals über einem vorbestimmten Schwellenwert.

4. Der Bewegungssensor gemäß Anspruch 3, wobei der Trigger Detektor einen Filter (34) aufweist, welcher einen Eingang hat, der mit dem Lautsprechereingang gekoppelt ist, und einen Ausgang hat, der mit dem Komparator Eingang gekoppelt ist.

5. Der Bewegungssensor gemäß Anspruch 3 oder 4, wobei der Trigger Detektor ferner aufweist
einen Controller (32), welcher einen Eingang hat, der mit dem Ausgang des Komparators gekoppelt ist, und einen Ausgang hat, der mit dem Triggerausgang gekoppelt ist,
wobei der Controller funktionsfähig ist zum Bestimmen, ob die Ausgabe des Komparators mit einer vorbestimmten Referenz Wellenform übereinstimmt, und zum Ausgeben eines Signals an dem Triggerausgang.

6. Der Bewegungssensor gemäß irgendeinem der Ansprüche 3 oder 4, wobei der Trigger Detektor ferner aufweist
einen Controller, welcher einen Eingang hat, der mit dem Ausgang des Komparators gekoppelt ist, und einen Ausgang hat, der mit dem Triggerausgang gekoppelt ist,
wobei der Controller funktionsfähig ist zum Ausgeben eines Aktivierungssignals, falls der Komparator zwei oder mehr Signale über dem vorbestimmten Schwellenwert innerhalb einer vorbestimmten Zeitperiode ausgibt.

7. Eine mobile Vorrichtung (400) aufweisend den Bewegungssensor gemäß irgendeinem vorangehenden Anspruch, wobei die mobile Vorrichtung ein Gehäuse aufweist, welches mit dem Lautsprecher mechanisch gekoppelt ist.

8. Die mobile Vorrichtung gemäß Anspruch 7, ferner aufweisend
einen Audioverstärker (46), welcher mit dem Lautsprechereingang gekoppelt ist, und
einen Prozessor, welcher mit dem Triggerausgang gekoppelt ist,
wobei die mobile Vorrichtung funktionsfähig ist zum Wechseln von einem ersten Modus zu einem zweiten Betriebsmodus als Reaktion darauf, dass ein Benutzer das Gehäuse antippt.

9. Die mobile Vorrichtung gemäß Anspruch 7 oder 8, wobei die mobile Vorrichtung funktionsfähig ist zum Einschalten als Reaktion darauf, dass ein Benutzer das Gehäuse antippt.

10. Die mobile Vorrichtung gemäß Anspruch 8, wobei in dem ersten Betriebsmodus der Trigger Detektor aktiviert ist und der Audioverstärker deaktiviert ist und in dem zweiten Betriebsmodus der Trigger Detektor deaktiviert ist und der Audioverstärker aktiviert ist.

11. Eine mobile Vorrichtung gemäß irgendeinem der Ansprüche 7 bis 10, wobei die mobile Vorrichtung funktionsfähig ist zum Bestimmen einer Position eines Antippens auf dem Gehäuse durch einen Benutzer.

12. Die mobile Vorrichtung gemäß Anspruch 11, aufweisend eines von einem Mobiltelefon, einem Tablet Computer und einem Laptop.

## Revendications

1. Capteur de mouvement (100, 200, 400) pour dispositif mobile, le capteur de mouvement comprenant :
un haut-parleur (10) destiné à délivrer un signal audio, le haut-parleur possédant une entrée de haut-parleur ;
un haut-parleur supplémentaire (10') couplé mécaniquement au haut-parleur, le haut-parleur supplémentaire possédant une entrée de haut-parleur supplémentaire ;
un détecteur de déclenchement (52) possédant une entrée de déclenchement couplée à l'entrée de haut-parleur, une entrée de déclenchement supplémentaire couplée à l'entrée de haut-parleur supplémentaire et une sortie de déclenchement ; dans lequel
le détecteur de déclenchement a pour fonction de délivrer un signal de détection sur la sortie de déclenchement en réponse à un signal induit mécaniquement sur l'entrée de haut-parleur et l'entrée de haut-parleur supplémentaire en réponse à une source de mouvement ; et
le détecteur de déclenchement comprend en outre un module détecteur de déclenchement multiple (54) couplé à l'entrée de déclenchement, à l'entrée de déclenchement supplémentaire et à la sortie de déclenchement ;
dans lequel le module détecteur de déclenchement multiple a pour fonction de comparer un signal reçu sur l'entrée de déclenchement à une forme d'onde de référence, de comparer un signal reçu sur l'entrée de déclenchement supplémentaire à une forme d'onde de référence supplémentaire et de délivrer un signal d'activation sur la sortie de déclenchement si la forme d'onde de référence correspond à un signal reçu sur l'entrée de déclenchement et la forme d'onde de référence supplémentaire correspond au signal reçu sur l'entrée de déclenchement supplémentaire, et
le détecteur de déclenchement est conçu en outre pour établir une valeur de retard à partir d'une mesure du retard entre un signal reçu sur l'entrée de déclenchement et un signal reçu sur l'entrée de déclenchement supplémentaire et pour établir une position de la source de mouvement à partir de la valeur de retard.

2. Capteur de mouvement selon la revendication 1, dans lequel le détecteur de déclenchement comprend un module de forme d'onde de référence (22) destiné à stocker au moins une forme d'onde de référence et un module de comparaison (24), le module de comparaison possédant une première entrée couplée à l'entrée de déclenchement, une deuxième entrée couplée à une sortie de l'au moins une forme d'onde de référence, et une sortie couplée à la sortie de déclenchement, et dans lequel le détecteur de déclenchement a pour fonction de délivrer le signal de détection sur la sortie de déclenchement si un signal sur l'entrée de déclenchement correspond à une forme d'onde de référence, chaque forme d'onde de référence représentant un signal induit mécaniquement attendu généré sur l'entrée du haut-parleur.

3. Capteur de mouvement selon la revendication 1, dans lequel le détecteur de déclenchement comprend un comparateur (36) possédant une entrée de comparateur couplée à l'entrée de déclenchement, et dans lequel le comparateur a pour fonction de délivrer un signal au-dessus d'une valeur de seuil préétablie.

4. Capteur de mouvement selon la revendication 3, dans lequel le détecteur de déclenchement comprend un filtre (34) possédant une entrée couplée à l'entrée de haut-parleur, et une sortie couplée à l'entrée de comparateur.

5. Capteur de mouvement selon la revendication 3 ou 4, dans lequel le détecteur de déclenchement comprend en outre une unité de commande (32) possédant une entrée couplée à la sortie du comparateur et une sortie couplée à la sortie de déclenchement, l'unité de commande ayant pour fonction d'établir si la sortie du comparateur correspond à une forme d'onde de référence préétablie et délivrer un signal sur la sortie de déclenchement.

6. Capteur de mouvement selon l'une quelconque des revendications 3 ou 4, dans lequel le détecteur de déclenchement comprend en outre une unité de commande possédant une entrée couplée à la sortie du comparateur et une sortie couplée à la sortie de déclenchement, l'unité de commande ayant pour fonction de délivrer un signal d'activation si le comparateur délivre deux signaux ou plus au-dessus de la valeur de seuil préétablie dans un laps de temps préétabli.

7. Dispositif mobile (400) comprenant le capteur de mouvement selon l'une quelconque des revendications précédentes, le dispositif mobile comprenant un boîtier couplé mécaniquement au haut-parleur.

8. Dispositif mobile selon la revendication 7, comprenant en outre un amplificateur audio (46) couplé à l'entrée de haut-parleur et un processeur couplé à la sortie de déclenchement, le dispositif mobile ayant pour fonction de basculer d'un premier mode sur un deuxième mode de fonctionnement en réponse à un tapotement du boîtier par un utilisateur.

9. Dispositif mobile selon la revendication 7 ou 8, lequel dispositif mobile a pour fonction de s'allumer en réponse à un tapotement du boîtier par un utilisateur.

10. Dispositif mobile selon la revendication 8, dans lequel, dans le premier mode de fonctionnement, le détecteur de déclenchement est activé et l'amplificateur audio est désactivé et, dans le deuxième mode de fonctionnement, le détecteur de déclenchement est désactivé et l'amplificateur audio est activé.

11. Dispositif mobile selon l'une quelconque des revendications 7 à 10, lequel dispositif mobile a pour fonction d'établir une position d'un tapotement sur le boîtier par un utilisateur.

12. Dispositif mobile selon la revendication 11 comprenant un téléphone mobile ou un ordinateur-tablette ou encore un ordinateur portable.
